# EUROPÄISCHE PATENTSCHRIFT

(11) **EP 4 448 324 B1**
(45) Veröffentlichungstag und Bekanntmachung des Hinweises auf die Patenterteilung: **25.02.2026**
(21) Anmeldenummer: 23704268.4
(22) Anmeldetag: 31.01.2023
(51) Int. Cl.: B60K 1/04, B60K 1/00, B60L 50/60, H01M 10/6569, H01M 10/658, H01M 50/236, H01M 50/249, H01M 50/26, H01M 50/333, H01M 50/342, H01M 50/358, H01M 50/383, B60L 3/00, B60L 58/26, H01M 10/0525, B60L 50/64

(54) **BATTERIESYSTEMGERÜST, GEHÄUSE UND VERFAHREN ZUR AUFNAHME VON MINDESTENS EINEM ERSTEN UND MINDESTENS EINEM BENACHBARTEN ZWEITEN BATTERIEMODUL IN EINEM FAHRZEUG ZUR BILDUNG EINES BATTERIESYSTEMS**
BATTERY SYSTEM FRAME, HOUSING AND METHOD FOR RECEIVING AT LEAST ONE FIRST AND AT LEAST ONE ADJACENT SECOND BATTERY MODULE IN A VEHICLE FOR FORMING A BATTERY SYSTEM
CADRE DE SYSTÈME DE BATTERIE, BOÎTIER ET PROCÉDÉ DE RÉCEPTION D'AU MOINS UN PREMIER ET D'AU MOINS UN SECOND MODULE DE BATTERIE ADJACENT DANS UN VÉHICULE POUR FORMER UN SYSTÈME DE BATTERIE

(30) Priorität: 25.02.2022 DE 102022201951
(43) Veröffentlichungstag der Anmeldung: 23.10.2024
(73) Patentinhaber: Siemens Mobility GmbH, 80997 München (DE)
(72) Erfinder: DITTRICH, Maik, 91052 Erlangen (DE); COMMES, Matthias, 82131 Gauting (DE); WEIGEL, Tim, 80992 München (DE)
(74) Vertreter: Siemens Patent Attorneys
(86) Internationale Anmeldenummer: PCT/EP2023/052278
(87) Internationale Veröffentlichungsnummer: WO 2023/160966

(56) Entgegenhaltungen:
- WO-A1-2015/158042
- JP-A- 2017 098 014
- US-A1- 2007 144 804

## Beschreibung

Die Erfindung betrifft ein Batteriesystemgerüst zur Aufnahme von mindestens einem ersten und mindestens einem benachbarten zweiten Batteriemodul in einem Fahrzeug zur Bildung eines Batteriesystems gemäß dem Oberbegriff des Anspruchs 1, ein Gehäuse zur Bildung des Batteriesystemgerüsts gemäß dem Gattungsbegriff des Anspruchs 9 und ein Verfahren zur Aufnahme von mindestens einem ersten und mindestens einem benachbarten zweiten Batteriemodul in einem Fahrzeug zur Bildung eines Batteriesystems gemäß dem Oberbegriff des Anspruchs 10.

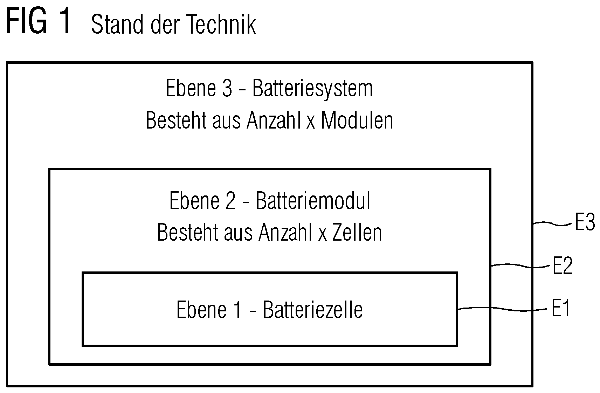

Batteriesysteme, die auf Lithium-Ionen Batteriezellen beruhen, sind bekannt. Beispielsweise kommen solche Systeme auch in Schienenfahrzeugen für deren Traktions- und Bordnetzanwendungen zum Einsatz. Ein typisches Lithium-Ionen Batteriesystem für Traktions- und Bordnetzanwendungen lässt sich dabei, insbesondere für die Definition von Sicherheitsanforderungen, schematisch wie in FIGUR 1 abgebildet darstellen.

Demgemäß kann man bei einem für den genannten Zweck eingesetzten Batteriesystem drei Ebenen unterscheiden. Eine erste Ebene E1 ist dabei durch eine Batteriezelle gebildet. Aus einer Anzahl solcher Zellen wird wiederrum ein Batteriemodul gebildet. Dies kann als zweite Ebene E2 aufgefasst werden.

Das Batteriesystem und somit letztendlich die dritte Ebene E3 wird in der Regel durch mehrere Batteriemodule gebildet.

Bei Lithium-Ionen Batteriezellen besteht grundsätzlich die Gefahr, dass diese durch einen internen Kurzschluss in Brand geraten. Diese Reaktion ist stark exotherm und wird als so genanntes Thermal-Runaway (TRA) bezeichnet.

Bei einer derartigen Reaktion, wird ein Vielfaches der elektrisch gespeicherten Energie in Wärme umgesetzt. Ursachen für den internen Kurzschluss können beispielsweise Fehler in der Produktion der Zelle sein, wie beispielsweise Fremdpartikel.

Ein TRA ist - soweit es nicht beispielsweise durch menschliches Fehlverhalten ausgelöst wurde - ein in der Regel also dem Zufall unterliegendes Ereignis in einer Zelle, das jederzeit, spontan sowohl während des Betriebes als auch während einer Lagerung, auftreten kann. Die Ursachen für ein TRA sind dabei beispielsweise bereits durch die Fertigung in den Zellen angelegt. Ein TRA kann also nicht ausgeschlossen bzw. verhindert werden, daher ist, insbesondere bei so großen Systemen wie sie bei Schienenfahrzeugen zum Einsatz kommen, ein Sicherheitskonzept erforderlich, welches die Verkehrssicherheit gewährleistet.

Um die Sicherheit des Batteriesystems nachzuweisen, wird daher in der Norm EN 62619 der so genannte Thermal Propagation Test (TPT) gefordert. Hierbei ist nachzuweisen, dass es nach dem internen Kurzschluss einer einzelnen Zelle wahlweise zu keinem Brand auf Zellebene (erster Ebene E1), Modulebene (zweiter Ebene E2) oder zu keinem Brand auf Batteriesystemebene kommt (dritter Ebene E3).

Bekannte Konzepte, die dies gewährleisten, bestehen beispielsweise darin einen TRA beständigen Container für das gesamte Batteriesystem herzustellen. Diese Lösung ist aber, nicht zuletzt, weil der Container mit einem schweren Außengehäuse versehen wird, teuer und ab einer bestimmten Energiemenge auch nicht mehr realisierbar.

Ein weiterer Ansatz besteht darin sicherere Zellen, also Lithium-Ionen Zellen zu nutzen, die derart aufgebaut sind, dass sie eine verringerte TRA Energie aufweisen und/oder mit zelleninternen Schutzmechanismen ausgestattet sind. Auch dieser Ansatz führt zu hohen Kosten.

Ein weiteres Konzept besteht darin, brandhemmende Barrieren, wie beispielsweise Phasen-Wechsel-Materialien, zwischen einzelnen Zellen innerhalb eines Moduls vorzusehen, wie es beispielsweise aus der US 2007/144804 Al bekannt ist. Allerdings überzeugt dieses Konzept hinsichtlich der Zuverlässigkeit seiner Funktion nicht, wogegen der Ansatz, dauerhaft aktives Zuführen von Kühlwasser in das System mittels elektrisch betriebener Wasserpumpen zur Kühlung des Systems vorzusehen, bei Betrieb des einsetzenden Fahrzeugs eine vergleichsweise kostengünstige Lösung verspricht, da das Kühlsystem bereits für den regulären Betrieb vorhanden ist. Nachteilig hierbei ist aber, dass diese Funktion wohl nicht gewährleistet werden kann, während das Fahrzeug abgerüstet und der Wasser-Füllstand im Kühlsystem nun sicherheitsrelevant ist.

Die der Erfindung zugrundeliegende Aufgabe ist es daher, eine Lösung anzugeben, die die Nachteile des Standes der Technik überwindet, insbesondere liegt die technische Aufgabe darin, eine Lösung anzugeben, die es ermöglicht Lithium-Ionen Zellen im Wesentlichen ohne Einschränkungen der Ausgestaltung der Zellen, in Fahrzeugen, vorzugsweise in Schienenfahrzeugen, zu nutzen.

Die Aufgabe wird erfindungsgemäß durch das Batteriesystemgerüst gemäß Oberbegriff des Anspruchs 1 durch dessen kennzeichnende Merkmale gelöst, durch das Gehäuse gemäß Gattungsbegriff des Anspruchs 9, durch dessen Merkmale gelöst, sowie durch das Verfahren gemäß dem Oberbegriff des Anspruchs 10, durch dessen kennzeichnende Merkmale gelöst.

Bei dem erfindungsgemäßen Batteriesystemgerüst zur Aufnahme von mindestens einem ersten und mindestens einem benachbarten zweiten Batteriemodul in einem Fahrzeug zur Bildung eines Batteriesystems, vorzugsweise in einem Maschinenraum des Fahrzeugs, insbesondere eines Schienenfahrzeugs,
a) sind das erste Batteriemodul und zweite Batteriemodul aus mehreren, insbesondere Lithium-Ionen, Batteriezellen gebildet, wobei das erste Batteriemodul und das zweite Batteriemodul, in einem separaten Gehäuse angeordnet sind,
b) ist das Gehäuse aus einem brandfesten, insbesondere durch eine inwändig am Gehäuse angebrachte Wärmedämmung verstärkt, wärmeisolierenden Material gebildet,
c) umfasst das Gehäuse eine Anordnung zur Drucksicherung,
d) umfasst das Gehäuse eine brandfeste Schnittstelle für den Anschluss und Betrieb des ersten und zweiten Batteriemoduls im Batteriesystem,
e) ist das Gehäuse derart ausgestaltet ist, dass an jeder Drucksicherung ein Abgasstutzen derart angeschlossen, dass seitens der Drucksicherung emittierte Gase vermittelt durch den Abgasstutzen mit einer brandfesten Abluftvorrichtung, insbesondere einen Kamin, kontrolliert abgeführt werden kann,
f) ist das Gehäuse, die Schnittstelle und/oder die Drucksicherung derart ausgestaltet und/oder angeordnet, dass das das erste und zweite Batteriemodul durch das Gehäuse, die Schnittstelle und die Drucksicherung zumindest temporär hermetisch abgeschlossen ist,
g) ist eine offene Tragstruktur zur Aufnahme der ersten und zweiten Batteriemoduls derart ausgestaltet, dass zwischen Gehäuse des ersten Batteriemoduls und, insbesondere mit den zweiten Batteriemodulen durch Wärmeübertragung verbundenen, angrenzenden Flächen, eine Vielzahl von Luftpalten derart gebildet werden, die derart verbunden und ausgestaltet sind, dass sie eine Struktur bilden, die seitens jeweiligem Batteriemodul abgegebene Wärme durch einen Kamineffekt kontrolliert ableiten.

Durch das erfindungsgemäße Batteriesystemgerüst wird sowohl ein Brandschutz des das Gerüst beinhaltenden und das damit erfindungsgemäß gebildeten Batteriesystems sowie im Fahrzeug oder unter Umständen auch im nahen Umfeld des Fahrzeugs befindliche Personen vor Bränden und deren Auswirkungen schützt. Dies wird unter erfindungsgemäß dadurch bewirkt, dass ein etwaiger von einer Batteriezelle verursachter Brand durch das brandfeste, also mindestens hochtemperaturfeste Material, auf das diese Zelle beinhaltende Batteriemodul begrenzt wird.

Durch geeignete Dimensionierung und Ausgestaltung dieses Systems, beispielsweise durch Redundanzen, kann somit zudem sogar die Funktion des Batteriesystems für das Fahrzeug nicht oder nur unwesentlich beeinträchtigt werden.

Auch die Behebung des Schadens, also im Wesentlichen, der Austausch des betroffenen Batteriemoduls, wird durch die Erfindung erleichtert und bietet Schutz für das Wartungspersonal, da diese erfindungsgemäßen Wirkungen in jedem Betriebszustand des Batteriesystems bzw. des Fahrzeugs gegeben sind.

Diese Schutzfunktion ist unter anderem durch die Isolation der Batteriemodule untereinander aber auch durch die durch die Ausgestaltung der Elemente des Gerüsts, also Tragstruktur, Gehäuse und/oder Abluftvorrichtung gegeben. Die aufeinander abgestimmte Ausgestaltung dieser Elemente gewährleistet gemäß Erfindung, dass Wärme und Reaktionsgase im System zügig abgeführt werden.

Das ist sowohl im Normalbetrieb vorteilhaft als auch im Brandfall von Vorteil, da dies neben einer ohnehin für einen Normalbetrieb vorgesehenen Kühlung, auch einen Beitrag leisten kann, dass die gewünschten Temperaturen im Normalbetrieb eingehalten werden können, was unter anderem auch abnorme Zustände von Zellen reduzieren kann, und im Brandfall der Einfluss auf weitere Batteriemodule weitestgehend reduziert wird.

Dies wird noch durch die Wärmedämmung innerhalb des Gehäuses verstärkt. Dieses bietet einen weiteren Freiheitsgrad zur Einstellung des Maßes einer zum umschlossenen Modul gelangenden Wärmeenergie in einem bestimmten Zeitraum. Ein weiterer Freiheitsgrad kann insbesondere durch die Wahl der Eigenschaften des Gehäuses derart bereitgestellt werden, dass das Gehäuse nur in einer Richtung für Wärme durchlässig ist bzw. in dieser Richtung, einen stärkeren Durchlass hat, nämlich nach außen. Bei so einer Ausgestaltung wirkt das Gehäuse derart mit der Wärmedämmung zusammen, dass die Wärmedämmung zu einer dosierten Wärmeabgabe führt und das benachbarte Gehäuse durch seine Eigenschaft diese dosierte, als bereits reduzierte Wärmeenergie vorliegende Energie, möglichst lange im Inneren des Gehäuses enthaltenen zweiten Modul fernhält.

Im Brandfall kommt auch die Funktion der Drucksicherung zum Tragen, denn bei einem Brand ist mit einer Druckerhöhung im Inneren des Gehäuses zu rechnen, die auf die strukturelle Stabilität des Gehäuses wirkt und es zerstören kann. Mit einer geeigneten Dimensionierung der Drucksicherung wird erfindungsgemäß sichergestellt, dass bei bzw. vor einem Erreichen eines zerstörerischen Drucks das für den Druck verantwortliche Gas entweichen kann.

In Verbindung mit der Abluftvorrichtung, der über die Abgasstutzen dieses Gas zugeführt wird, stellt man ein kontrolliertes Entweichen des Gases derart sicher, dass auch andere Elemente des Batteriesystems nicht zerstörerisch beeinträchtigt werden. Die Abgasstutzen stellen dabei sicher, dass die Abluftvorrichtung der benachbarten Module diese Funktion schadlos zur Verfügung stellen kann und somit auch nach einem derartigen Vorfall zur Verfügung steht.

Hierzu sind die Vorrichtung und die Abgasstutzen genauso wie alle anderen außerhalb des Gehäuses angeschlossenen bzw. anschließbaren Elemente noch zusätzlich brandfest ausgestaltet.

Die Erfindung ist dabei so flexibel, dass Batteriemodule grundsätzlich durch alle Arten von Batteriezellen gebildet werden können, bei denen ein Brand oder andere auf Nachbarmodule übergreifende zerstörerische Ereignisse nicht vollständig ausgeschlossen werden können.

Das Batteriesystem ist homogen, also vollständig durch solche Batteriemodule bestückt und so können alle Batteriemodule in einem erfindungsgemäßen Gehäuse umhüllt in die Tragstruktur zur Bildung des Batteriesystemgerüstes aufgenommen werden.

Die Erfindung ermöglicht es also unsichere Batteriemodule, die beispielsweise zumindest zum Teil durch Lithium-Ionen Zellen gebildet werden, einzusetzen und in ein Batteriesystem eines Fahrzeugs zu integrieren. Hierdurch wird der Einsatz kostengünstiger und/oder höhere Energiedichte aufweisender Batteriezellen möglich.

Das erfindungsgemäße Gehäuse zeichnet sich dadurch aus, dass es derart ausgestaltet ist, dass es die genannte Funktion gemäß erfindungsgemäßem Batterietragsystem und/oder einem der in den Unteransprüchen angegeben Weiterbildungen dieser Funktion bzw. für diese Funktionen sowie deren Kombinationen bereitstellt. Hierdurch leistet das Gehäuse bei der Bildung des Batteriesystemgerüsts sowie bei der Verwirklichung der Vorteile des erfindungsgemäßen Verfahrens und dessen Weiterbildungen.

Bei dem erfindungsgemäßen Verfahren zur Aufnahme von mindestens einem ersten und mindestens einem benachbarten zweiten Batteriemodul in einem Fahrzeug zur Bildung eines Batteriesystems, vorzugsweise in einem Maschinenraum des Fahrzeugs, insbesondere eines Schienenfahrzeugs,
a) werden das erste Batteriemodul und zweite Batteriemodul aus mehreren, insbesondere Lithium-Ionen, Batteriezellen gebildet und betrieben,
b) werden das erste und zweite Batteriemodul, in einem separaten Gehäuse betrieben,
c) wird das Gehäuse aus einem brandfesten, insbesondere durch eine inwändig am Gehäuse angebrachte Wärmedämmung (WD) verstärkt, wärmeisolierenden Material gebildet,
d) umfasst das Gehäuse eine Anordnung zur Drucksicherung,
e) umfasst das Gehäuse eine brandfeste Schnittstelle für den Anschluss und Betrieb des jeweiligen Batteriemoduls im Batteriesystem,
f) wird das Gehäuse derart betrieben, dass an jeder Drucksicherung ein Abgasstutzen derart angeschlossen ist, dass seitens der Drucksicherung emittierte Gase vermittelt durch den Abgasstutzen mit einer brandfesten Abluftvorrichtung, insbesondere einen Kamin, kontrolliert abgeführt werden können,
g) wird das Gehäuse, die Schnittstelle und/oder die Drucksicherung derart ausgestaltet und/oder angeordnet betrieben, dass das Batteriemodul durch das Gehäuse, die Schnittstelle und die Drucksicherung zumindest temporär hermetisch abgeschlossen ist,
h) wird eine offene Tragstruktur zur Aufnahme des ersten und zweiten Batteriemoduls derart ausgestaltet und betrieben, dass zwischen Gehäuse des ersten Batteriemoduls und, insbesondere mit den zweiten Batteriemodulen durch Wärmeübertragung verbundenen, angrenzenden Flächen, eine Vielzahl von Luftpalten derart gebildet werden, die derart verbunden und ausgestaltet sind, dass sie eine Struktur bilden, die seitens des jeweiligen Batteriemoduls abgegebener Wärme durch einen Kamineffekt kontrolliert ableiten.

Das erfindungsgemäße Verfahren ermöglicht die Bereitstellung und den Betrieb des erfindungsgemäßen Batteriesystemgerüsts und weist damit auch dessen Vorteile sowie die Vorteile seiner Weiterbildungen auf.

Weitere vorteilhafte Ausgestaltungen und Weiterbildungen der Erfindung sind durch die Unteransprüche angegeben.

Wird das erfindungsgemäße Batteriesystemgerüst derart weitergebildet, dass das Gehäuse, insbesondere so viele der Elemente des Batteriesystemgerüsts, wie möglich, aus, insbesondere mit einem geeigneten Dämmmaterial versehenem, Edelstahl gebildet ist und so betrieben wird, ist ein Gehäuse gegeben, dass eine sehr gute Kombination aus Brandfestigkeit, Stabilität und Wärmeisolierung bietet. Zudem entfällt bei Edelstahl eine bei anderen Stoffen oft notwendige Beschichtung und Lackierung zur Vermeidung von Rost. Diese sind potenziell brennbar. Daher wird durch diese Ausgestaltung auch die Brandlast reduziert.

Vorzugsweise kann das erfindungsgemäße Batteriesystemgerüst gemäß einer Weiterbildung derart ausgestaltet sein und betrieben werden, dass die Wärmedämmung aus einem bidirektional dämmenden Werkstoff gebildet ist. Hierdurch kann die Wärmeabgabe in beide Richtungen dosiert erfolgen. Dadurch sind zusätzliche Freiheitsgrade bei der Optimierung des Schutzes gegeben.

Das erfindungsgemäße Batteriesystemgerüst kann auch alternativ oder ergänzend derart weitergebildet und betrieben werden, dass die Drucksicherung als eine mit dem Gehäuse und/oder der Wärmedämmung verbundene Berstmembran ausgestaltet ist und betrieben wird. Hierdurch ist eine einfache und kostengünstige Realisierung der Drucksicherung gegeben, die ab einem determinierten Druck durch Brandabgase und/oder Erreichen einer determinierten Temperatur in Richtung der Abluftvorrichtung birst und Abgase und/oder Wärme damit abführen lassen kann. Diese Membran kann dann Teil des Gehäuses und/oder der Wärmedämmung sein.

Vorzugsweise wird das erfindungsgemäße Batteriesystemgerüst derart ausgestaltet sein und betrieben werden, dass die Drucksicherung als eine mit dem Gehäuse und/oder der Wärmedämmung verbundene Berstscheibe ausgestaltet ist. Derartige Berstscheiben sind genormt und beinhalten in der Regel eine Berstmembran mit den oben genannten Vorteilen, so dass in dem Gehäuse bzw. der Wärmedämmung eine entsprechend der Norm ausgestaltete Aufnahmemöglichkeit angebracht werden kann. Solcherlei genormte Teile sind in der Regel in höheren Stückzahlen erhalten und weisen daher zu dem genannten Vorteil zusätzlich den Vorteil auf, dass sie kostengünstiger in der Anschaffung sind.

Alternativ oder ergänzend kann das erfindungsgemäße Batteriesystemgerüst derart weitergebildet werden, dass die Drucksicherung als mindestens ein mit dem Gehäuse und/oder der Wärmedämmung verbundene federgespannte Überdruckklappe ausgestaltet ist und betrieben wird.

Eine solche Überdruckklappe hat den Vorteil, dass sie lediglich Gase ab einem gewissen Druck durchlassen. Eine federgespannte Druckklappe hat den Vorteil, dass sie lediglich Festkörper kleiner als der Durchmesser der Klappenöffnung durchlässt. Im Gegensatz zu der Berstmembram bzw. der Berstscheibe gelangen so also lediglich höchstens kleine, in der Regel einfacher entfernbare Festteile in die Abluftvorrichtung. Ferner ist die Überdruckklappe selbst keiner Zerstörung unterworfen und klappt nach Ablassen des Überdrucks wieder zurück, so dass dann die Sauerstoffzufuhr ins Innere des Moduls unterbrochen ist. Dies erhöht also zusätzlich den Brandschutz.

Vorzugsweise weisen Berstmembran und/oder federgespannte Überdruckklappen eine derart dimensionierte Öffnung auf, dass eine Verstopfung durch Feststeile ausgeschlossen werden kann bzw. die Wahrscheinlichkeit nahezu hierfür nahezu 0 ist.

Ergänzend kann das erfindungsgemäße Batteriesystemgerüst derart weitergebildet werden, dass mindestens eine passive Kühlungsvorrichtung mit mindestens einem Gehäuse und/oder der Wärmedämmung verbunden ist. Diese ergänzt die passive Kühlung, die bereits durch die Luftspalte in der Gerüststruktur gegeben ist und kann eine über, insbesondere Norm bzw. TPT geforderten Schutz, hinausgehende Kühlungsfunktion bereitstellen.

Vorzugsweise wird diese weitere passive Kühlung dann derart weitergebildet sein und betrieben werden, dass das Gehäuse und/oder die Wärmedämmung mit einem mit einer Kühlflüssigkeit, insbesondere Wasser, gefüllten Ausgleichsbehälter derart verbunden und ausgestaltet ist, dass die Kühlflüssigkeit die am Gehäuse und/oder der Wärmedämmung durch Hitze zur Verdampfung gebracht wurde, aus dem Ausgleichsbehälter schwerkraftgetrieben nachläuft, die verdampfte Kühlflüssigkeit im Ausgleichbehälter aufgefangen und abgekühlt wird. Hierdurch ist ein geschlossener Kreislauf gegeben, der unabhängig vom Kamineffekt für Kühlung sorgt.

Weitere Vorteile und Details der Erfindung werden ausgehend von dem in Figur 1 dargestellten Stand der Technik anhand der in den Figuren 2 bis 3 dargestellten Ansichten eines Ausführungsbeispiels der Erfindung erläutert.

Dabei zeigt
- FIGUR 1: schematisch eine gemäß Stand der Technik bei einem Batteriesystem anwendbare Definition von unterscheidbaren Ebenen,
- FIGUR 2: schematisch die Frontansicht eines Ausführungsbeispiels der erfindungsgemäßen Anordnung,
- FIGUR 3: schematisch eine Seitenansicht des Ausführungsbeispiel der erfindungsgemäßen Anordnung.

Bei den Ansichten der Ausführungsbeispiele stellen die beschriebenen Komponenten der Ausführungsform jeweils einzelne, unabhängig voneinander zu betrachtende, Merkmale der Erfindung dar, welche die Erfindung jeweils auch unabhängig voneinander weiterbilden und damit auch einzeln oder in einer anderen als der gezeigten Kombination als Bestandteil der Erfindung, die von den Ansprüchen definiert wird, anzusehen sind.

Des Weiteren sind die beschriebenen Komponenten der dargestellten Ausführungsform auch durch weitere der bereits beschriebenen Merkmale der Erfindung ergänzbar.

Etwaige Angaben zu Funktionen und Wirkungsweise sind zudem als ein Ausführungsbeispiel erfindungsgemäßer Verfahrensweise zu betrachten, auch wenn dies nicht explizit erwähnt wird.

Gleiche Bezugszeichen haben in den verschiedenen Figuren die gleiche Bedeutung.

In der FIGUR 1 ist wie eingangs beschrieben die Aufteilung eines typischen Lithium-Ionen Batteriesystem für Traktions- und Bordnetzanwendungen dargestellt. Diese Aufteilung dient als Grundlage für die Bestimmung von Funktionseinheiten. Diese werden unter anderem für die Definition von Sicherheitsanforderungen gemäß der Norm EN 62619 verwandt.

Zu erkennen ist die erste Ebene E1, die eine erste durch eine Batteriezelle gebildete Funktionseinheit bezeichnet. Des Weiteren ist die zweite Ebene E2 zu erkennen, die eine zweite durch ein oder mehrere Batteriemodule gebildete Funktionseinheit bezeichnet, welche in der Regel aus einer Mehrzahl von Zellen, also ersten Funktionseinheiten gebildet wird. Schließlich ist noch die dritte Ebene E3 zu erkennen, welche die durch ein Batteriesystem gebildete dritte Funktionseinheit bezeichnet, die aus mindestens einem Batteriemodul gebildete wird.

Die Sicherheitsanforderung gemäß der Norm EN 62619, der sog. Thermal Propagation Test (TPT), ist dann erfüllt, wenn nachgewiesen werden kann, dass das System derart ausgestaltet ist, dass bei einem TRA entweder auf Zellebene E1, Modulebene E2 oder auf Batteriesystemeben E3 Brände ausgeschlossen werden können.

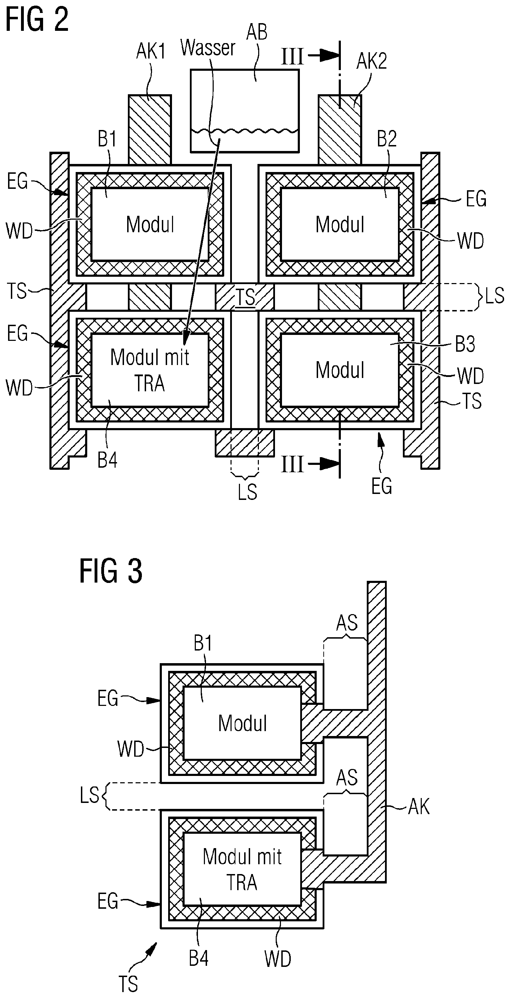

Die Erfindung, zu der in FIGUR 2 und FIGUR 3 die Front- und Seitenansicht eines Ausführungsbeispiels der Erfindung gezeigt wird, schlägt dazu ein Konzept zur Umsetzung des TRA Schutzes auf Modulebene E2 vor, welches in einen Brandschutz der Ebene E3 mündet und somit die zweite Alternative gemäß Norm realisiert.

In der FIGUR 2 ist die Frontansicht als ein Ausführungsbeispiel einer Anordnung gemäß der Erfindung dargestellt anhand dem als Ausführungsbeispiel auch schematisch ein Verfahren der Erfindung dargestellt ist und die erfindungsgemäße Verfahrensweise erläutert wird.

Zu erkennen ist eine aufnehmende Tragstruktur TS. Diese Tragstruktur TS ist gemäß dem Ausführungsbeispiel als ein offenes Gerüst geformt, welches ferner derart ausgestaltet ist, dass es - wie in der FIGUR 2 zu erkennen - zur Aufnahme mehrerer Batteriemodule B1...B4 ausgestaltet ist und diese Ausgestaltung derart gegeben ist, dass mit aufgenommenen Batteriemodulen B1...B4 zumindest zwischen den Batteriemodulen B1...B4 Luftspalte LS ausgeformt sind. Das Gerüst ist dabei gemäß dem Beispiel als Niet-Schraub-Konstruktion ausgestaltet. Diese erlaubt den Austausch einzelner Komponenten nach einer Montage bzw. Anbringung in einem Maschinenraum.

Die Erfindung ist dabei zur Ausformung der Luftspalte nicht allein auf eine Ausformung der Tragstruktur TS begrenzt. Vielmehr können die Batteriemodule B1...B4, das heißt, beispielsweise ein die Zellen, welche das Batteriemodul bilden, aufnehmendes Gehäuse EG des Batteriemoduls, alternativ oder ergänzend so ausgeformt sein, dass diese Luftspalte LS nach Anbringen in eine Tragstruktur TS - gemeinsam mit der Tragstruktur TS oder alternativ dazu - ausgeformt sind. Die Funktion der Luftspalte LS, also ein Verfahrensschritt gemäß Ausführungsbeispiel des erfindungsgemäßen Verfahrens, ist die Gewährleistung einer Wärmeabfuhr auf Basis einer konvektiven Entwärmung.

Zu diesem Zweck ist die Tragstruktur TS und/oder sind die Batteriemodule, insbesondere ein die Zellen des

Batteriemoduls B1...B4 aufnehmendes Gehäuse EG, gemäß Ausführungsbeispiel der Anordnung derart ausgestaltet, dass die ausgebildeten Luftspalte LS sich derart zusammenschließen, dass sich ein Kamineffekt ergibt, der sich in den Luftspalten LS abgegebene Wärme schnell und kontrolliert abführen kann. Dieser Zusammenschluss führt dabei zumindest mit Teilen das Batteriesystems bzw. Gerüsts, diesen Kamineffekt. Ferner können diese Schlitze LS sich zu einem Abgaskamin (Kamin) AK hin erstrecken, so dass dieser ebenfalls durch den Luftspalt LS am Kamineffekt teilnimmt und zusätzlich zu seiner Funktion, einer Abgasabfuhr, an der Kühlung des Konstrukts beteiligt sein kann. Denn gemäß einem weiteren Schritt gemäß Ausführungsbeispiel des erfindungsgemäßen Verfahrens folgend, werden bei einem Brand entstehende Abgase eines der Batteriemodule B1...B4 in Form von heißen Gasen an mindestens einen Kamin AK1...AK2 geführt, der für einen Abzug dieser Abgase sorgt, so dass durch den Kamineffekt für einen zügigen Wärme-/Abgasabzug bzw. Kühlung gesorgt wird und durch den separaten Kamin AK1...AK2 dies die anderen Batteriemodule B1...B4 schützend erfolgt.

Bei dargestellten Ausführungsbeispiel einer erfindungsgemäßen Anordnung sind zwei Kamine AK1...AK2 angebracht. Die Anzahl der Kamine AK1...K2 ist aber hierauf nicht begrenzt. Vielmehr kann dies eine beliebige Anzahl von Kaminen AK sein oder die einzelnen Kamine AK können in einem gemeinsamen Kamin für das gesamte System gesammelt werden. Je nach gewünschter Wirkung bzw. Optimierungsgrad und/oder vorgegebener Parameter wie Freiheitsgraden in der Dimensionierung der Anordnung.

Da bei dem dargestellten Ausführungsbeispiel die Batteriemodule B1...B4 in zwei Reihen und zwei Spalten angeordnet sind, wurden von den zwei Kaminen AK1...AK2 jeweils einer Spalte zugeordnet. Denkbar wäre also davon abweichend auch eine von der Spaltenanzahl unabhängige Lösung. Also beispielsweise ein Kamin für die zwei Spalten oder sogar drei oder noch mehr Kamine. Je nachdem worauf der Schwerpunkt bei der Ausgestaltung der Anordnung gelegt wird. Bei dem gezeigten Beispiel liegt ein Vorteil darin, dass eine für alle Spalten gleichmäßige Entwärmung anzunehmen ist bzw. angestrebt wird.

Wie man der FIGUR 2 ferner entnehmen kann, ist ein erstes Batteriemodul B1, ein zweites Batteriemodul B2 und ein drittes Batteriemodul B3 nicht mit einem TRA Ereignis beaufschlagt. Lediglich bei dem vierten Batteriemodul B4 ist ein TRA Ereignis für die Erläuterung der Ausführungsbeispiele als spontan aufgetreten zu betrachten. Dieses Ereignis birgt die Gefahr eines Brandes aufgrund des TRA. Dieses vierte Batteriemodul B4 ist also auch beispielsweise mit mindestens einer Lithium-Ionen Zelle bestückt, welche als unsicher zu betrachten ist; beispielsweise, weil eine hohe Energiedichte aufweist und/oder keine besonderen zelleninternen Sicherheitsmaßnahmen aufweist, die Kurzschlüsse und somit TRA Ereignisse verhindern und/oder die Wahrscheinlichkeit auf ein Minimum reduzieren.

Gemäß dem Ausführungsbeispiel der erfindungsgemäßen Anordnung sind alle Module mit an hinsichtlich TRA Wahrscheinlichkeit "unsicheren" Batteriemodulen B1...B4 bestückt.

Eine der möglichen Weiterbildungen der Erfindung ist in dem Ausführungsbeispiel der erfindungsgemäßen Anordnung durch einen Ausgleichsbehälter AB gegeben. Dieser ist Wasser gefüllt mit dem einen unsicheren vierten Batteriemodul B4 gemäß Ausführungsbeispiel derart verbunden, dass sein Wasser schwerkraftgetrieben zum vierten Batteriemodul B4 läuft.

Das vierte Batteriemodul B4 ist, wie die anderen Batteriemodule B1...B3 auch, dabei derart ausgestaltet, dass es dieses Wasser mit seiner Erwärmung bis hin zu dessen Verdampfung erhitzen und Wasser vom Ausgleichsbehälter AB im Maße des Volumens des verdampften Wassers nachlaufen kann.

Diese Weiterbildung stellt der erfindungsgemäßen Anordnungen zur weiteren Verbesserung eine Entwärmung mittels Verdampfungsenthalpie zur Seite, die erfindungsgemäß, insbesondere nicht zum Bestehen des TPT, nicht zwingend erforderlich ist, da bereits die Ausführungsbeispiele der erfindungsgemäßen Anordnung grundsätzlich ohne solch einen Ausgleichbehälter AB die Sicherheitsvorgaben erfüllen. Diese Weiterbildung stellt vielmehr eine weitere passive Kühlungsmöglichkeit dar, die darüberhinausgehende Sicherheit bieten kann. Also gewissermaßen einen Puffer darstellt.

Vorzugsweise wird im Falle des Einsatzes dieser Weiterbildung jedes unsichere Batteriemodul B1...B3 mit einem derartigen Ausgleichsbehälter AB verbunden und entsprechend ausgestaltet sein, um diesen zusätzlichen Verfahrensschritt zur Kühlung durchführen zu können.

Die Menge der angeschlossenen unsicheren Batteriemodule B1...B3 an den Ausgleichsbehälter AB ist dabei jeweils nach den jeweiligen Anforderungen an das in einem Fahrzeug zu platzierende System frei wählbar.

In der FIGUR 2 ist ferner zu erkennen, dass die Batteriemodule B1...B4 gemäß Ausführungsbeispiel derart gebildet sind, dass sie von einer Wärmedämmung WD umgeben sind.

Diese Wärmedämmung WD ist bevorzugt derart ausgestaltet, dass sie bidirektional wirkt. Ferner wird die Wärmedämmung nahezu vollständig um das jeweilige Modul B1...B4 verbaut sein. In der Regel werden lediglich die Schnittstellen bzw. Öffnungen hierfür oder andere zwingend erforderliche Öffnungen frei davon sein.

Die Batteriemodule B1...B4 werden zudem mit einer in dieser Ansicht nicht zu sehenden Berstmembran BM ergänzt.

Ferner sind notwendige Schnittstellen der Batteriemodule B1...B4 brandfest ausgestaltet.

Wärmedämmung WD und Berstmembran BM werden wiederrum von dem Gehäuse EG bis auf notwendige Aussparungen umhüllt, welches zu den bereits genannten Ausgestaltungen derart geformt bzw. gebildet ist, dass es in die Tragstrukur TS aufgenommen wird und/oder auch einen Teil der Tragfunktion der Tragstruktur bildet bzw. ergänzt.

Wie nun in der in FIGUR 3 dargestellten Seitenansicht des Ausführungsbeispiels der erfindungsgemäßen Anordnung zu erkennen ist, ist das Edelstahlgehäuse EG der Module B1...B4 jeweils so gebildet, dass die Berstmembran BM an einem Abgasstutzen AS zu liegen gebracht wird, so dass das jeweilige Batteriemodul B1...B4 jeweils über den Abgastutzen AS an die Abgaskamine AK angeschlossen wird.

Die Berstmembran BM, kann als eine berstende Membran enthaltende Berstscheibe ausgestaltet sein. Denkbar ist es auch, dass die Membran in einer dem Aufbau bei einer Berstscheibe analogen Weise mit der Wärmedämmung WD, die sie an der Seite der Abgasstutzen AS befindet.

Die Berstmembran BM - mit oder ohne Berstscheiben implementiert - sorgen für einen Schutz der restlichen Batteriemodule B1...B4 bzw. der gesamten Tragstruktur TS bei Auftreten eines Überdrucks in dem in das in die Wärmedämmung WD und das Edelstahlgehäuse EG gekapselte jeweiligen Batteriemodul B1...B4 in dem der Überdruck bei Erreichen eines kritischen Maßes die Membran BM platzen lässt und der Druck somit kontrolliert zugeführt durch die Abgasstutzen AS über die Abgaskamine AK entweichen kann.

Hierdurch wird eine der vorteilhaften Funktionen der Erfindung sichergestellt, nämlich, dass bei einem TRA der Schaden auf das betroffene, einzelne Batteriemodul B1...B4 begrenzt bleibt. Das bedeutet, dass prinzipiell ein Abgasstutzen AS je unsicherem Batteriemodul BM für diesen Zweck grundsätzlich ausreichen würde. Das dargestellte Ausführungsbeispiel geht also auch diesbezüglich über notwendigen Schutz und die Wirkung der Erfindung hinaus, da es auch sichere Module B1...B3 anschließt, und stellt eine der möglichen Weiterbildungen dar, die erfindungsgemäß möglich sind, um zusätzliche Sicherheit zu bieten.

Zu diesem Ziel tragen unter anderem auch die Luftspalte LS sowie die Edelstahlgehäuse EG und die bidirektionalen Wärmedämmungen WD bei. Das Gehäuse EG in dem es Stabilität aber auch Wärmeleitfähigkeiten aufweist und die Wärmedämmung WD, da sie sowohl das jeweilige Batteriemodul B1...B4 von außen eindringender Wärme schützen, als auch eine Abgabe der Hitze im Normalbetrieb aber auch und vor Allem bei einem TRA so weit einschränken, dass dies alleine und/oder im Zusammenwirken mit den anderen erfindungsgemäßen Merkmalen der Anordnung bzw. des Verfahrens ausreicht, um die Funktionalität der sicheren Batteriemodule B1...B3 nicht zu stören.

Die Erfindung bietet sich also vor Allem bei einem Einsatz von für "unsicheren" Zellen an. Hierdurch wird der Einsatz von Lithium-Zellen mit sehr hoher Energiedichte in Fahrzeugen, insbesondere Schienenfahrzeugen, möglich.

Ein weiterer Vorteil, der auch diesen Einsatz unterstützt, ist, dass der TRA auf ein durch TRA betroffenes, also in der Regel unsicheres, Batteriemodul B3 begrenzt wird.

Es wird demnach durch die Erfindung gewissermaßen eine kleinste brennbare Einheit definiert, die sich in einem Batteriemodul B3 erschöpft. Die sicheren bzw. verbleibenden nicht vom TRA betroffenen Module B1...B3 bleiben voll funktionsfähig erhalten.

Das Konzept ist speziell für Lithium-Ionen Zellen, die keinen TRA-Schutz auf Zelllevel besitzen, gedacht. Sie ist allerdings nicht darauf eingeschränkt. Im Grunde bietet die Erfindung die Reduktion von Schäden durch zerstörerische Energien eines Brandes in jedwedem Modul B1...B4. Entfaltet aber durch sein Schutzkonzept eben besonders beim Einsatz unsicherer Zellen die meisten Vorteile.

Durch die Erfindung wird möglich, dass nach einem Brandereignis, lediglich das betroffene Modul ausgetauscht werden muss. Je nach Steuerung und Verschaltung der Module B1...B4 bzw. unterstützt durch Redundanzen, kann in so einem Fall der Betrieb des Batteriesystems BS nahezu unterbrechungsfrei fortgeführt werden. Selbst im Brandfall.

Da die erfindungsgemäße Anordnung und das erfindungsgemäße Verfahren aktiven Kühlkreislauf obsolet machen und vorgesehene Kühlmethoden gemäß Erfindung und den Weiterbildungen rein passive Lösungen handelt, ist der erfindungsgemäße Schutz in Betriebszuständen gegeben, insbesondere auch beim Abrüsten oder im abgeschalteten Zustand des Fahrzeugs.

Mit der Erfindung kann man sich daher für einen Schutz, der gemäß TPT ausreicht, hinsichtlich von einem in der ersten Ebene E1 erforderlichen Sicherheitsmechanismus auf Zellebene lösen. Man kann wesentlich günstigere Lithium-Ionen Zellen einsetzen. Diese sind in einer wesentlich größeren Anzahl verfügbar, als sicherere Lithium-Ionen Zellen, und reduzieren somit die Zellkosten des erfindungsgemäßen Batteriesystems.

Mit der erfindungsgemäßen Lösung bedarf es auch keines im Wesentlichen in der dritte Ebene E3 realisierten Konzepts, welches auch nur sehr schwer implementierbar ist, da die freiwerdende TRA Energie des gesamthaft brennenden Batteriesystems mit einer hohen Anzahl Zellen jegliche Schutzmaßnahmen technisch unrealisierbar und unwirtschaftlich macht.

Durch die Erfindung wird also der Nachteil überwunden, der beim Einsatz eines TRA beständigen Container für das gesamte Batteriesystem BS ergibt. Dann ist nämlich bei einem Brand aufgrund eines TRA in einer Zelle eines einzigen Moduls ein Verlust des gesamten Systems gegeben. Ferner spart man sich schweres Außengehäuse, die für große Energiemengen kostentreibend dimensioniert sein müssen.

Die Erfindung reduziert zudem Ausfallwahrscheinlichkeiten.

Durch die Erfindung ist ferner eine derart robuste Lösung gegenüben, dass sogar ein Auslegungspuffer für kommende Zellgenerationen mit noch höherer Energiedichte vorhanden ist. Für derzeitige Systeme also mehr als ausreichenden Schutze bietet.

Der Aufwand, der hierzu erforderlich ist, erschöpft sich in einem akzeptablen Einsatz von zusätzlichem Material und/oder Mehrgewicht für den erfindungsgemäßen TRA Schutz, da die Gehäuse EG auch gleichzeitig Teile des Gerüsts TS bilden.

Die Erfindung ist nicht auf die gezeigten und diskutierten Ausführungsbeispiele der Anordnung und des Verfahrens sowie deren Weiterbildungen beschränkt. Vielmehr ist es so, dass mit der Erfindung, wie sie durch die Ansprüche definiert ist, alle - auch nicht angesprochene - durch die Ansprüche abgedeckten Varianten umfasst sein sollen.

## Patentansprüche

1. Batteriesystemgerüst zur Aufnahme von mindestens einem ersten (B4) und mindestens einem benachbarten zweiten Batteriemodul (B1...B3) in einem Fahrzeug zur Bildung eines Batteriesystems, vorzugsweise in einem Maschinenraum des Fahrzeugs, insbesondere eines Schienenfahrzeugs, wobei
a) das erste Batteriemodul (B4) und zweite Batteriemodul (B1...B3) aus mehreren, insbesondere Lithium-Ionen, Batteriezellen bildbar ist, **dadurch gekennzeichnet, dass**
b) das erste Batteriemodul (B4) und das zweite Batteriemodul (B1...B3), in einem separaten vom Batteriesystemgerüst umfassten Gehäuse (EG) anordenbar ist,
c) das Gehäuse (EG) aus einem brandfesten, insbesondere durch eine inwendig am Gehäuse angebrachte Wärmedämmung (WD) verstärkt, wärmeisolierenden Material gebildet ist,
d) das Gehäuse (EG) eine Anordnung zur Drucksicherung umfasst,
e) das Gehäuse (EG) eine brandfeste Schnittstelle für den Anschluss und Betrieb des Batteriemoduls (B4) im Batteriesystem (BS) umfasst,
f) das Gehäuse (EG) derart ausgestaltet ist, dass an jeder Drucksicherung ein Abgasstutzen (AS) derart anschließbar ist, dass seitens der Drucksicherung emittierte Gase vermittelt durch den Abgasstutzen (AS) mit einer brandfesten Abluftvorrichtung (AK1...AK2), insbesondere einem Kamin, kontrolliert abgeführt werden können,
g) das Gehäuse (EG), die Schnittstelle und/oder die Drucksicherung derart ausgestaltet und/oder angeordnet ist, dass das jeweilige Batteriemodul (B1...B4) durch das Gehäuse (EG), die Schnittstelle und die Drucksicherung zumindest temporär hermetisch abgeschlossen ist,
h) eine offene Tragstruktur (TS) zur Aufnahme des ersten Batteriemoduls (B4) und zweiten Batteriemoduls (B1...B3) derart ausgestaltet ist, dass zwischen Gehäuse (EG) des ersten Batteriemoduls (B4) und, insbesondere mit den zweiten Batteriemodulen (B1...B3) durch Wärmeübertragung verbundenen, angrenzenden Flächen, eine Vielzahl von Luftspalten (LS) derart gebildet werden, die derart verbunden und ausgestaltet sind, dass sie eine Struktur bilden, die seitens jeweiligem Batteriemodul (B1...B4) abgegebene Wärme durch einen Kamineffekt kontrolliert ableitet.

2. Batteriesystemgerüst nach einem der vorhergehenden Ansprüche, **dadurch gekennzeichnet, dass** das Gehäuse (EG) aus Edelstahl gebildet ist.

3. Batteriesystemgerüst nach einem der vorhergehenden Ansprüche, **dadurch gekennzeichnet, dass** die Wärmedämmung (WD) aus einem bidirektional dämmenden Werkstoff gebildet ist.

4. Batteriesystemgerüst nach einem der vorhergehenden Ansprüche, **dadurch gekennzeichnet, dass** die Drucksicherung (BM) als eine mit dem Gehäuse (EG) und/oder der Wärmedämmung (WD) verbundene Berstmembran ausgestaltet ist.

5. Batteriesystemgerüst nach einem der vorhergehenden Ansprüche, **dadurch gekennzeichnet, dass** die Drucksicherung als eine mit dem Gehäuse (EG) und/oder der Wärmedämmung (WD) verbundene Berstscheibe ausgestaltet ist.

6. Batteriesystemgerüst nach einem der vorhergehenden Ansprüche, **dadurch gekennzeichnet, dass** die Drucksicherung (BM) als mindestens eine mit dem Gehäuse (EG) und/oder der Wärmedämmung (WD) verbundene federgespannte Überdruckklappe ausgestaltet ist.

7. Batteriesystemgerüst nach einem der vorhergehenden Ansprüche, **dadurch gekennzeichnet, dass** mindestens eine passive Kühlungsvorrichtung (AB) mit mindestens einem Gehäuse (EG) und/oder der Wärmedämmung (WD) verbunden ist.

8. Batteriesystemgerüst nach dem vorhergehenden Anspruch, **dadurch gekennzeichnet, dass** die passive Kühlung (AB) derart ausgestaltet ist, dass das Gehäuse und/oder die Wärmedämmung (WD) mit einem mit einer Kühlflüssigkeit, insbesondere Wasser, gefüllten Ausgleichsbehälter (AB) derart verbunden und ausgestaltet ist, dass die Kühlflüssigkeit die am Gehäuse und/oder an der Wärmedämmung durch Hitze zur Verdampfung gebracht wurde, aus dem Ausgleichsbehälter (AB) schwerkraftgetrieben nachläuft, die verdampfte Kühlflüssigkeit im Ausgleichbehälter (AB) aufgefangen und abgekühlt wird.

9. Gehäuse (EG) zur Bildung des Batteriesystemgerüsts nach einem der vorhergehenden Ansprüche.

10. Verfahren zur Aufnahme von mindestens einem ersten (B4) und mindestens einem zweiten Batteriemodul (B1...B3) in einem Fahrzeug zur Bildung eines Batteriesystems mittels eines Batteriesystemgerüsts nach einem der Ansprüche 1 bis 8, vorzugsweise in einem Maschinenraum des Fahrzeugs, insbesondere eines Schienenfahrzeugs, wobei
a) das erste Batteriemodul (B4) und zweite Batteriemodul (B1...B3) aus mehreren, insbesondere Lithium-Ionen, Batteriezellen gebildet und betrieben werden können, **dadurch gekennzeichnet, dass**
b) das erste Batteriemodul (B4) und das zweite Batteriemodul (B1...B3), in einem separaten vom Batteriesystemgerüst umfassten Gehäuse (EG) betrieben werden,
c) das Gehäuse (EG) aus einem brandfesten, insbesondere durch eine inwendig am Gehäuse angebrachte Wärmedämmung (WD) verstärkt, wärmeisolierenden Material gebildet wird,
d) das Gehäuse (EG) eine Anordnung zur Drucksicherung (BM) umfasst,
e) das Gehäuse (EG) eine brandfeste Schnittstelle für den Anschluss und Betrieb des jeweiligen Batteriemoduls (B1...Bq4) im Batteriesystem (BS) umfasst,
f) das Gehäuse (EG) derart betrieben wird, dass an jeder Drucksicherung (BM) ein Abgasstutzen (AS) derart angeschlossen ist, dass seitens der Drucksicherung (BM) emittierte Gase vermittelt durch den Abgasstutzen (AS) mit einer brandfesten Abluftvorrichtung (AK1...AK2), insbesondere einem Kamin, kontrolliert abgeführt werden können,
g) das Gehäuse (EG), die Schnittstelle und/oder die Drucksicherung (BM) derart ausgestaltet und/oder angeordnet betrieben werden, dass das Batteriemodul(B4) durch das Gehäuse (EG), die Schnittstelle und die Drucksicherung (BM) zumindest temporär hermetisch abgeschlossen ist,
h) eine offene Tragstruktur (TS) zur Aufnahme des ersten Batteriemoduls (B4) und zweiten Batteriemoduls(B1...B3) derart ausgestaltet und betrieben wird, dass zwischen Gehäuse (EG) des ersten Batteriemoduls (B4) und, insbesondere mit den zweiten Batteriemodulen (B1...B3) durch Wärmeübertragung verbundenen, angrenzenden Flächen, eine Vielzahl von Luftspalten (LS) derart gebildet wird, die derart verbunden und ausgestaltet sind, dass sie eine Struktur bilden, die seitens jeweiligem Batteriemodul (B1...B4) abgegebene Wärme durch einen Kamineffekt kontrolliert ableitet.

## Claims

1. Battery system frame for accommodating at least a first battery module (B4) and at least one adjacent second battery module (B1...B3) in a vehicle in order to form a battery system, preferably in an engine compartment of the vehicle, in particular of a rail vehicle, wherein
a) the first battery module (B4) and the second battery module (B1...B3) can be formed of multiple, in particular lithium ion battery cells, **characterized in that**
b) the first battery module (B4) and the second battery module (B1...B3) can be arranged in a separate housing (EG) of the battery system frame,
c) the housing (EG) is made of a fire-resistant, thermally insulating material, the thermal insulation effect in particular being enhanced by a thermal insulation (WD) mounted on the inner wall of the housing,
d) the housing (EG) comprises a pressure relief arrangement,
e) the housing (EG) comprises a fire-resistant interface for connection and operation of the battery module (B4) in the battery system (BS),
f) the housing (EG) is configured such that an exhaust gas port (AS) can be connected to each pressure relief means such that gases emitted by the pressure relief means can be discharged through the exhaust gas port (AS) by means of a fire-resistant exhaust air device (AK1... AK2), in particular a chimney, in a controlled way,
g) the housing (EG), the interface and/or the pressure relief means are configured and/or arranged such that the respective battery module (B1...B4) is at least temporarily hermetically sealed by the housing (EG), the interface and the pressure relief means,
h) an open support structure (TS) for accommodating the first battery module (B4) and the second battery module (B1...B3) is configured such that a multiplicity of air gaps (LS) is formed between the housing (EG) of the first battery module (B4) and adjoining surfaces in particular connected to the second battery modules (B1...B3) by way of heat transfer, and these air gaps are connected and configured such that they form a structure which dissipates heat given off by the respective battery module (B1... B4) by virtue of a chimney effect in a controlled way.

2. Battery system frame according to one of the preceding claims, **characterized in that** the housing (EG) is made of stainless steel.

3. Battery system frame according to either of the preceding claims, **characterized in that** the thermal insulation (WD) is made of a bidirectionally insulating material.

4. Battery system frame according to one of the preceding claims, **characterized in that** the pressure relief means (BM) is in the form of a rupture membrane connected to the housing (EG) and/or to the thermal insulation (WD).

5. Battery system frame according to one of the preceding claims, **characterized in that** the pressure relief means is in the form of a rupture disk connected to the housing (EG) and/or to the thermal insulation (WD).

6. Battery system frame according to one of the preceding claims, **characterized in that** the pressure relief means (BM) is in the form of at least one spring-loaded pressure relief flap connected to the housing (EG) and/or to the thermal insulation (WD).

7. Battery system frame according to one of the preceding claims, **characterized in that** at least one passive cooling device (AB) is connected to at least one housing (EG) and/or to the thermal insulation (WD).

8. Battery system frame according to the preceding claim, **characterized in that** the passive cooling means (AB) is configured such that the housing and/or the thermal insulation (WD) is connected to a compensating vessel (AB) filled with a cooling liquid, in particular water, and is configured such that the cooling liquid that was caused to evaporate on the housing and/or on the thermal insulation owing to heat is made to run out of the compensating vessel (AB) by gravitational force and the evaporated cooling liquid is collected and cooled in the compensating vessel (AB).

9. Housing (EG) for forming the battery system frame according to one of the preceding claims.

10. Method for accommodating at least a first battery module (B4) and at least one second battery module (B1...B3) in a vehicle in order to form a battery system by means of a battery system frame according to one of Claims 1 to 8, preferably in an engine compartment of the vehicle, in particular of a rail vehicle, wherein
a) the first battery module (B4) and the second battery module (B1...B3) can be formed of and operated on the basis of multiple, in particular lithium ion battery cells, **characterized in that**
b) the first battery module (B4) and the second battery module (B1...B3) are operated in a separate housing (EG) of the battery system frame,
c) the housing (EG) is made of a fire-resistant, thermally insulating material, the thermal insulation effect in particular being enhanced by a thermal insulation (WD) mounted on the inner wall of the housing,
d) the housing (EG) comprises a pressure relief arrangement (BM),
e) the housing (EG) comprises a fire-resistant interface for connection and operation of the respective battery module (B1... Bq4) in the battery system (BS),
f) the housing (EG) is operated such that an exhaust gas port (AS) is connected to each pressure relief means (BM) such that gases emitted by the pressure relief means (BM) can be discharged through the exhaust gas ports (AS) by means of a fire-resistant exhaust air device (AK1...AK2), in particular a chimney, in a controlled way,
g) the housing (EG), the interface and/or the pressure relief means (BM) are configured and/or operated in an arrangement such that the battery module (B4) is at least temporarily hermetically sealed by the housing (EG), the interface and the pressure relief means (BM),
h) an open support structure (TS) for accommodating the first battery module (B4) and the second battery module (B1...B3) is configured and operated such that a multiplicity of air gaps (LS) is formed between the housing (EG) of the first battery module (B4) and adjoining surfaces in particular connected to the second battery modules (B1...B3) by way of heat transfer, and these air gaps are connected and configured such that they form a structure which dissipates heat given off by the respective battery module (B1...B4) by virtue of a chimney effect in a controlled way.

## Revendications

1. Cadre de système de batterie pour la réception d'au moins un premier module de batterie (B4) et d'au moins un second module de batterie (B1...B3) adjacent dans un véhicule pour former un système de batterie, de préférence dans un compartiment moteur du véhicule, en particulier d'un véhicule ferroviaire, dans lequel
a) le premier module de batterie (B4) et le second module de batterie (B1...B3) peuvent être formés à partir de plusieurs cellules de batterie, en particulier des cellules lithium-ion, **caractérisé en ce que**
b) le premier module de batterie (B4) et le second module de batterie (B1...B3) peuvent être disposés dans un boîtier (EG) séparé, entouré par le cadre de système de batterie,
c) le boîtier (EG) est constitué d'un matériau isolant et résistant au feu, renforcé notamment par une isolation thermique (WD) appliquée à l'intérieur du boîtier,
d) le boîtier (EG) comprend un agencement pour la protection contre la surpression,
e) le boîtier (EG) comprend une interface résistante au feu pour le raccordement et l'exploitation du module de batterie (B4) dans le système de batterie (BS),
f) le boîtier (EG) est conçu de telle sorte qu'un raccord d'échappement (AS) puisse être raccordé à chaque dispositif de protection contre la surpression, de manière à ce que les gaz émis par le dispositif de protection contre la surpression puissent être évacués de façon contrôlée par l'intermédiaire du raccord d'échappement (AS) à l'aide d'un dispositif d'évacuation d'air résistant au feu (AK1...AK2), en particulier une cheminée,
g) le boîtier (EG), l'interface et/ou le dispositif de protection contre la surpression sont conçus et/ou disposés de telle sorte que le module de batterie (B1...B4) correspondant est au moins temporairement fermé hermétiquement par le boîtier (EG), l'interface et le dispositif de protection contre la surpression,
h) une structure porteuse ouverte (TS) pour la réception du premier module de batterie (B4) et du second module de batterie (B1...B3) est conçue de telle sorte qu'entre le boîtier (EG) du premier module de batterie et en particulier les surfaces adjacentes reliées par transmission thermique aux seconds modules de batterie (B1...B3), une pluralité d'intervalles d'air (LS) soit formée, lesquels intervalles d'air sont reliés et conçus de manière à former une structure qui évacue de façon contrôlée la chaleur dégagée par chaque module de batterie (B1...B4) grâce à un effet de cheminée.

2. Cadre de système de batterie selon l'une des revendications précédentes, **caractérisé en ce que** le boîtier (EG) est en acier inoxydable.

3. Cadre de système de batterie selon l'une des revendications précédentes, **caractérisé en ce que** l'isolation thermique (WD) est constituée d'un matériau isolant bidirectionnel.

4. Cadre de système de batterie selon l'une des revendications précédentes, **caractérisé en ce que** le dispositif de protection contre la surpression (BM) est conçu comme une membrane de rupture reliée au boîtier (EG) et/ou à l'isolation thermique (WD).

5. Cadre de système de batterie selon l'une des revendications précédentes, **caractérisé en ce que** le dispositif de protection contre la surpression est conçu comme un disque de rupture relié au boîtier (EG) et/ou à l'isolation thermique (WD).

6. Cadre de système de batterie selon l'une des revendications précédentes, **caractérisé en ce que** le dispositif de protection contre la surpression (BM) est conçu comme au moins un clapet de surpression à ressort relié au boîtier (EG) et/ou à l'isolation thermique (WD).

7. Cadre de système de batterie selon l'une des revendications précédentes, **caractérisé en ce qu'**au moins un dispositif de refroidissement passif (AB) est relié à au moins un boîtier (EG) et/ou à l'isolation thermique (WD).

8. Cadre de système de batterie selon la revendication précédente, **caractérisé en ce que** le refroidissement passif (AB) est conçu de telle sorte que le boîtier et/ou l'isolation thermique (WD) sont reliés à un réservoir de compensation (AB) rempli d'un liquide de refroidissement, en particulier de l'eau (AB) de telle sorte que le liquide de refroidissement qui s'est évaporé sous l'effet de la chaleur au niveau du boîtier et/ou de l'isolation thermique s'écoule par gravité depuis le réservoir de compensation (AB), le liquide de refroidissement évaporé est recueilli et refroidi dans le réservoir de compensation (AB).

9. Boîtier (EG) destiné à former la structure du système de batterie selon l'une des revendications précédentes.

10. Procédé de réception d'au moins un premier (B4) et d'au moins un second module de batterie (B1...B3) dans un véhicule pour former un système de batterie à l'aide d'un cadre de système de batterie selon l'une des revendications 1 à 8, de préférence dans un compartiment moteur du véhicule, en particulier d'un véhicule ferroviaire, dans lequel
a) le premier module de batterie (B4) et le second module de batterie (B1...B3) peuvent être formés et exploités à partir de plusieurs cellules de batterie, en particulier des cellules lithium-ion, **caractérisé en ce que**
b) le premier module de batterie (B4) et le second module de batterie (B1...B3) sont exploités dans un boîtier (EG) séparé, entouré par le cadre de système de batterie,
c) le boîtier (EG) est constitué d'un matériau isolant et résistant au feu, renforcé notamment par une isolation thermique (WD) appliquée à l'intérieur du boîtier,
d) le boîtier (EG) comprend un agencement pour la protection contre la surpression (BM),
e) le boîtier (EG) comprend une interface résistante au feu pour le raccordement et l'exploitation du module de batterie (B1...B4) correspondant dans le système de batterie (BS),
f) le boîtier (EG) est exploité de telle sorte qu'un raccord d'échappement (AS) est raccordé à chaque dispositif de protection contre la surpression (BM) de manière à ce que les gaz émis par le dispositif de protection contre la surpression (BM) puissent être évacués de manière contrôlée par le raccord d'échappement (AS) à l'aide d'un dispositif d'évacuation d'air résistant au feu (AK1...AK2), en particulier une cheminée,
g) le boîtier (EG), l'interface et/ou le dispositif de protection contre la surpression (BM) sont conçus et/ou disposés de telle sorte que le module de batterie (B4) est au moins temporairement hermétiquement fermé par le boîtier (EG), l'interface et le dispositif de protection contre la surpression (BM),
h) une structure porteuse ouverte (TS) pour la réception du premier module de batterie (B4) et du second module de batterie (B1...B3) est conçue et exploitée de telle sorte qu'entre le boîtier (EG) du premier module de batterie et en particulier les surfaces adjacentes reliées par transmission thermique aux seconds modules de batterie (B1...B3), une pluralité d'intervalles d'air (LS) soit formée, lesquels intervalles d'air sont reliés et conçus de manière à former une structure qui évacue de façon contrôlée la chaleur dégagée par chaque module de batterie (B1...B4) grâce à un effet de cheminée.
